(19) Europäisches Patentamt
European Patent Office
Office européen des brevets

(11) **EP 2 993 062 B1**

(12) **EUROPEAN PATENT SPECIFICATION**

(45) Date of publication and mention of the grant of the patent:
**17.01.2018 Bulletin 2018/03**

(51) Int Cl.:
*B60C 3/04* *(2006.01)*     *B60C 11/00* *(2006.01)*
*C08K 3/36* *(2006.01)*     *C08L 21/00* *(2006.01)*
*B60C 1/00* *(2006.01)*

(21) Application number: **14792175.3**

(22) Date of filing: **21.04.2014**

(86) International application number:
**PCT/JP2014/002242**

(87) International publication number:
**WO 2014/178174 (06.11.2014 Gazette 2014/45)**

(54) **PNEUMATIC RADIAL TIRE FOR PASSENGER CAR**

RADIALLUFTREIFEN FÜR PASSAGIERFAHRZEUGE

PNEUMATIQUE RADIAL POUR VOITURE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2013 JP 2013095138**

(43) Date of publication of application:
**09.03.2016 Bulletin 2016/10**

(73) Proprietor: **Bridgestone Corporation**
**Tokyo 104-8340 (JP)**

(72) Inventors:
• **YAMAMOTO, Atsushi**
**Kodaira-shi**
**Tokyo 187-8531 (JP)**

• **MIMASU, Youhei**
**Kodaira-shi**
**Tokyo 187-8531 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
WO-A1-2012/176476    JP-A- 2000 080 205
JP-A- 2003 246 885    JP-A- 2008 143 485
JP-A- 2013 063 765    US-A1- 2011 083 780

**Description**

TECHNICAL FIELD

The present invention relates to a pneumatic radial tire for a passenger vehicle.

BACKGROUND ART

Bias tires having relatively narrow cross sectional widths were predominantly used in vehicles up to around 1960 because vehicles in those days were relatively lightweight, had relatively low cruising speed required thereof and thus did not put so much stress on the tires. However, radial tires are predominant these days and those having wider widths are in particular on demand due to increases in weight and speed of vehicles (e.g. PTL 1).

However, increasing widths of tires decreases free space in a vehicle and deteriorates comfortablility therein. Further, wider widths of tires increase air resistance and cause another problem of poor fuel consumption rates. There has been increasingly a demand for a lower fuel consumption rate as people are more concerned about environmental issues. Such a low fuel consumption rate can be evaluated by rolling resistance (RR) of a tire and it is known that the lower rolling resistance results in the lower fuel consumption rate of a vehicle.

In terms of reducing a rolling resistance value of a tire to achieve a low fuel consumption rate of a vehicle, it is known that increasing diameter and/or width of the tire is effective. However, increasing diameter and/or width of a tire also increases tire weight and air resistance thereon, thereby causing problems of higher resistance experienced by the vehicle and too much load exerted on the tire.

In view of the aforementioned problems, the applicant of the present application has proposed a technique related to a pneumatic radial tire for a passenger vehicle having a narrow tire width and a large tire outer diameter, in which the internal pressure, a cross sectional width (SW) and a tire outer diameter (OD) of the tire satisfy specific relationships (e.g. PTL 2, corresponding with the preamble of claim 1)

CITATION LIST

Patent Literature

PTL 1: JP-A 07-040706; PTL2: WO 2012/176476.
US 2011/0083780 A1 discloses a run-flat tire which has an excellent run-flat performance comprising a dynamic storage modulus E' (MPa) at 30°C and the loss tangent tan $\delta$ at 60°C of the tread rubber respectively satisfy the relationships represented by the following formulae: $5.0 \leq E'$ and $0.05 \leq \tan\delta$ 0.240.

SUMMARY

However, a radial tire having such a narrow width and a large outer diameter as described above has room for improvement in wet performance thereof, which performance is an index related to braking performance on a wet road surface. Accordingly, it is important in a radial tire having such a narrow width and a large outer diameter as described above to improve wet performance thereof.

An object of the present disclosure is to provide a pneumatic radial tire for a passenger vehicle, having a narrow width and a large outer diameter and exhibiting improved wet performance.

Our pneumatic radial tire for a passenger vehicle is a pneumatic radial tire for a passenger vehicle, having a carcass constituted of a carcass ply made of radially-disposed cords provided to extend in a toroidal shape across a pair of bead portions and a tread rubber provided on the outer side in the tire radial direction of the carcass, wherein: provided that SW and OD represent cross sectional width and outer diameter of the tire, respectively, and that the tire assembled with a rim is inflated at an internal pressure of at least 250 kPa, SW/OD (a ratio of the cross sectional width SW (mm) with respect to the outer diameter OD (mm) of the tire) is $\leq 0.26$ when SW < 165 (mm); SW and OD satisfy a formula shown below when SW $\geq$ 165 (mm); OD $\geq 2.135 \times$ SW + 282.3 and; dynamic storage elastic modulus E' of the tread rubber at 30 °C is in the range of 6.0 MPa to 12.0 MPa. A radial tire having a narrow width and an outer diameter can significantly improve wet performance thereof when dynamic storage elastic modulus E' of the tread rubber at 30 °C is within the above-specified range.

The cross sectional width SW and the outer diameter OD of a tire represent a cross sectional width and an outer diameter according to JIS D4202-1994, respectively, in a state where the tire assembled with a rim is inflated at internal pressure $\geq$ 250 kPa in our pneumatic radial tire for a passenger vehicle.
Dynamic storage elastic modulus E' (MPa) and loss tangent "tan $\delta$" (E"/E', a ratio of dynamic loss elastic modulus (E") with respect to dynamic storage elastic modulus E') each relate to vulcanized rubber and represent a value measured by exerting the initial load: 160 g on a test piece having thickness: 2 mm, width: 5 mm, and length: 20 mm under the conditions of initial strain: 1% and frequency: 50 Hz in our pneumatic radial tire for a passenger vehicle. The dynamic storage elastic modulus E' represents a value measured at 30 °C unless otherwise specified (which dynamic storage elastic modulus E' at 30 °C may occasionally be referred to simply as "E'" hereinafter). The loss tangent "tan $\delta$" represents a value measured at 60 °C unless otherwise specified (which loss tangent "tan $\delta$" at 60 °C may occasionally be referred to simply as "tan $\delta$" hereinafter). In our pneumatic radial tire for a passenger vehicle, the tread rubber represents rubber excluding a member like a belt which may optionally be included in the tread portion. A rim represents a rim having a width corresponding to a bead width of a tire in our pneumatic radial tire for a passenger vehicle.

The symbol "phr" represents a content (parts by mass) of a component with respect to 100 parts by mass of a rubber component in the present specification.

According to our pneumatic radial tire for a passenger vehicle, it is possible to provide a pneumatic radial tire for a passenger vehicle having a narrow width and a large outer diameter and exhibiting improved wet performance.

BRIEF DESCRIPTION OF THE DRAWINGS

In the accompanying drawings, wherein:

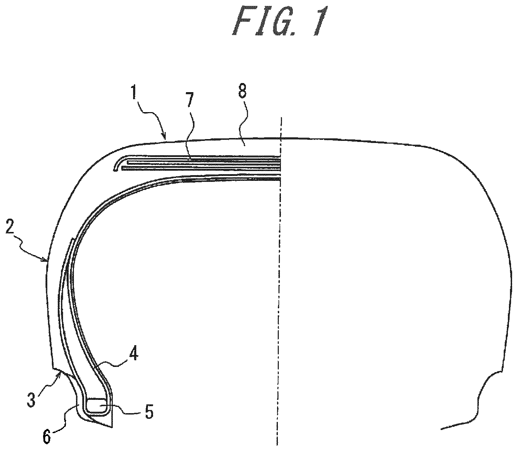

FIG. 1 is a schematic view showing a cross section of a left-half portion in the tire width direction of a pneumatic radial tire for a passenger vehicle according to one embodiment of our pneumatic radial tire for a passenger vehicle.

DETAILED DESCRIPTION

A pneumatic radial tire for a passenger vehicle according to one embodiment of our pneumatic radial tire for a passenger vehicle (which tire may occasionally be referred to simply as a "tire" hereinafter) will be demonstratively described in detail hereinafter with reference to the drawings. It should be noted that the descriptions and the drawings below relate to one example of our pneumatic radial tire for a passenger vehicle, provided only for an explanatory purpose, and do not restrict by any means our pneumatic radial tire for a passenger vehicle.

Our pneumatic radial tire for a passenger vehicle includes, for example, a carcass 4 constituted of a carcass ply made of radially-disposed cords provided to extend in a toroidal shape across a pair of bead portions 3 and a tread rubber 8 provided on the outer side in the tire radial direction of the carcass 4.

More specifically, the tire includes a tread portion 1, a pair of sidewall portions 2 continuous with respective side portions of the tread portion 1 and extending on the inner side in the tire radial direction, the bead portions 3 continuous with the inner ends in the tire radial direction of the respective sidewall portions 2, and a carcass 4 constituted of at least one carcass ply and extending in a toroidal shape from one bead portion 3 to the other bead portion 3, for reinforcing the aforementioned respective portions. A bead core 5 is embedded in each of the bead portions 3. The tire further includes: a rubber chafer 6 on the outer side surface of each of the bead portions 3 as a reinforcing member of the bead portion 3; and a belt 7 constituted of at least one belt ply on a crown portion of the carcass 4. The tread rubber 8 is provided on the outer side in the tire radial direction of the crown portion of the carcass 4.

Our pneumatic radial tire for a passenger vehicle is a pneumatic radial tire for a passenger vehicle, having a carcass constituted of a carcass ply made of radially-disposed cords provided to extend in a toroidal shape across a pair of bead portions and a tread rubber provided on the outer side in the tire radial direction of the carcass, wherein: provided that SW and OD represent cross sectional width and outer diameter of the tire, respectively, and that the tire assembled with a rim is inflated at an internal pressure of at least 250 kPa, SW/OD (a ratio of the cross sectional width SW (mm) with respect to the outer diameter OD (mm) of the tire) is $\leq$ 0.26 when SW < 165 (mm);

SW and OD satisfy a formula shown below when SW $\geq$ 165 (mm);

$$OD \geq 2.135 \times SW + 282.3$$

and;

dynamic storage elastic modulus E' of the tread rubber at 30 °C is in the range of 6.0 MPa to 12.0 MPa.

The radial tire having a narrow width and an outer diameter can significantly improve wet performance thereof because dynamic storage elastic modulus E' of the tread rubber at 30 °C thereof is within the above-specified range.

In our pneumatic radial tire for a passenger vehicle, assembled with a rim and inflated at an internal pressure of at least 250 kPa, SW/OD (a ratio of the cross sectional width SW (mm) with respect to the outer diameter OD (mm) of the tire) is $\leq$ 0.26 when SW < 165 (mm) and SW and OD satisfy a formula: OD $\geq$ 2.135 $\times$ SW + 282.3 when SW $\geq$ 165 (mm). The tire, satisfying the aforementioned relationship between the cross section width SW and the outer diameter OD, can reduce both a rolling resistance value and weight thereof.

The internal pressure of the tire is preferably ≥ 250 kPa and more preferably in the range of 250 kPa to 350 kPa in our pneumatic radial tire for a passenger vehicle.

In our pneumatic radial tire for a passenger vehicle, when the internal pressure of the tire is ≥ 250 kPa, the cross section width SW and the outer diameter OD preferably satisfy a formula shown below in terms of well reducing both a rolling resistance value and weight thereof.

$$OD \geq -0.0187 \times SW^2 + 9.15 \times SW - 380$$

(Rubber composition of tread rubber)

The tread rubber of our pneumatic radial tire for a passenger vehicle can be formed by: preparing a rubber composition including a conventionally known rubber component and conventionally known optional additives such as filler, anti-oxidant, vulcanizing agent, vulcanization accelerator, processing oil, anti-scorching agent, zinc white, stearic acid, and the like; and subjecting the rubber composition to mixing, kneading and vulcanization according to the conventional method.

Conditions in mixing and kneading are not particularly restricted and rotation speed of a rotor, ram pressure, temperature in mixing and kneading, and mixing and kneading time may be adjusted in an appropriate manner in accordance with blending details, a volume of the rubber composition to be charged into a mixing and kneading apparatus, and the like by using a Banbury mixer, a roll, an internal mixer or the like.

With regard to conditions in vulcanizing the rubber composition, vulcanization temperature and vulcanization time may be set to be, for example, in the range of 100 °C to 190 °C and in the range of 5 minutes to 80 minutes, respectively.

<Rubber component>

Examples of the rubber component include: modified/unmodified synthetic rubber such as styrene-butadiene copolymer rubber (SBR), butadiene rubber (BR), polyisoprene rubber (IR), isobutylene-isoprene rubber (IIR), halogenated butyl rubber, styreneisoprene copolymer rubber (SIR), chloroprene rubber (CR); natural rubber (NR); and the like.

A method for modifying a conjugated diene polymer such as SBR, BR is not particularly restricted and a conventionally known method may be employed. For example, the method disclosed in WO 2008/050845 (a method for reacting an active terminal of a conjugated diene-based polymer with a modifier and carrying out a condensation reaction by the help of the modifier under the presence of a titanium-based condensation accelerator) or the like can be employed.

Preferable examples of the conjugated diene-based polymer include copolymer of 1,3-butadiene and styrene.

Preferable examples of the modifier include N,N-bis(trimethylsilyl)aminoproplylmethyl dimethoxysilane, N,N-bis(trimethylsilyl)aminoproplylmethyl diethoxysilane, and 1-trimethylsilyl-2-ethoxy-2-methyl-1-aza-2-silacyclopentane.

Preferable examples of the titanium-based condensation accelerator include tetrakis(2-ethyl-1,3-hexanediolato)titanium, tetrakis(2-ethylhexoxy)titanium, and titanium di-n-butoxide(bis-2, 4-pentadionate).

The examples of the rubber component described above may be used either by one type solely or in combination of two or more types.

<Filler>

Examples of the filler include conventionally known carbon black, silica, calcium carbonate, talc, clay, and the like. The examples of the filler described above may be used either by one type solely or in combination of two or more types.

It is preferable in our pneumatic radial tire for a passenger vehicle that the rubber composition, forming the tread rubber, contains at least a rubber component and filler such that content of the filler is in the range of 50 to 100 parts by mass with respect to 100 parts by mass of the rubber component. This rubber composition is advantageous in terms of exhibiting good wear resistance and workability. The content of the filler is more preferably in the range of 55 to 85 parts by mass and further more preferably in the range of 75 to 85 parts by mass with respect to 100 parts by mass of the rubber component in terms of wear resistance and workability of the rubber composition. Further, it is particularly preferable that the content of the filler is in the range of 50 to 90 parts by mass with respect to 100 parts by mass of the diene-based polymer (diene-based rubber).

It is preferable in our pneumatic radial tire for a passenger vehicle that the filler contains silica such that content of silica is in the range of 25 to 100 parts by mass with respect to 100 parts by mass of the rubber component. This filler composition is advantageous in terms of achieving good wet performance of the tire. The content of silica is more preferably in the range of 50 to 75 parts by mass and further more preferably in the range of 60 to 75 parts by mass with respect to 100 parts by mass of the rubber component in terms of achieving good wet performance of the tire.

In a case where silica is used as the filler, the silica may be treated by a silane coupling agent.

The aforementioned E' of the tread rubber is to be in the range of 6.0 MPa to 12.0 MPa. A tire, satisfying the specific relationship between the cross sectional width SW and the outer diameter OD described above, cannot obtain an effect of improving wet performance thereof in a satisfactory manner when E' is beyond the aforementioned range. The aforementioned E' is preferably in the range of 7.9 MPa to 12.0 MPa and more preferably in the range of 8.5 MPa to 11.0 MPa. Wet performance of the tire can be further improved when E' is in these preferable ranges.

The aforementioned E' can be brought within the range of 6.0 MPa to 12.0 MPa by appropriately changing the content of modified S-SBR with respect to diene-based polymer (100 phr) within the range of 20 to 70 phr and the content of silica with respect to the filler (50 to 80 phr) within the range of 30 to 80 phr.

It is preferable in our pneumatic radial tire for a passenger vehicle that loss tangent "tan $\delta$" at 60 °C of the tread rubber is in the range of 0.05 to 0.18 because then rolling resistance of the tire further decreases. The aforementioned tan $\delta$ can be brought within the range of 0.05 to 0.18 by appropriately changing the content of NR and the content of modified S-SBR with respect to diene-based polymer (100 phr) within the range of 0 to 20 phr and the range of 20 to 70 phr, respectively, and the content of silica with respect to the filler (50 to 80 phr) within the range of 30 to 80 phr.

EXAMPLES

Our pneumatic radial tire for a passenger vehicle will be described further in detail by the following Examples, which do not restrict our pneumatic radial tire for a passenger vehicle by any means.

Examples 1-9 and Comparative Examples 1-12

Radial tires of Examples each having a narrow width, a large outer diameter, and tread rubber made of a rubber composition prepared according to the blending details shown in Table 1, as well as radial tires of Comparative Examples each having a conventional tire dimensions/the same tire configuration as Example tire and the same tread rubber as Example tires, were prepared. A group of Example radial tires with a narrow width and a large diameter each had the cross sectional width SW: 155 mm and the outer diameter OD: 653.1 mm (this size will be referred to as "Size 1 of our tire" in Table 2) and another group of Example radial tires with a narrow width and a large diameter each had the cross sectional width SW: 165 mm and the outer diameter OD: 697.1 mm (this size will be referred to as "Size 2 of our tire" in Table 2). Conventional Example radial tires each had the cross sectional width SW: 195 mm and the outer diameter OD: 634.5 mm (this size will be referred to as "Conventional Size" in Table 2). Internal pressure values of the respective test tires are also shown in Table 2.

On this basis, dynamic storage elastic modulus E' of the tread rubber at 30 °C, loss tangent "tan $\delta$" at 0 °C, loss tangent "tan $\delta$" at 60 °C, wet performance, and rolling resistance of each test tire were evaluated as described below. The results are shown in Table 2.

[Table 1]

| | Rubber 1 | Rubber 2 | Rubber 3 | Rubber 4 | Rubber 5 | Rubber 6 | Rubber 7 | Rubber 8 | Rubber 9 | Rubber 10 |
|---|---|---|---|---|---|---|---|---|---|---|
| NR | 20.0 | 20.0 | 0.0 | 0.0 | 0.0 | 0.0 | 0.0 | 0.0 | 0.0 | 0.0 |
| E-SBR(low Tp) | 20.0 | 20.0 | 0.0 | 0.0 | 0.0 | 0.0 | 0.0 | 0.0 | 0.0 | 0.0 |
| E-SBR(high Tg) | 0.0 | 0.0 | 40.0 | 40.0 | 40.0 | 40.0 | 40.0 | 40.0 | 50.0 | 50.0 |
| Modified S-SBR | 60.0 | 60.0 | 60.0 | 60.0 | 60.0 | 60.0 | 60.0 | 60.0 | 50.0 | 50.0 |
| Carbon black | 5.0 | 5.0 | 10.0 | 10.0 | 10.0 | 15.0 | 20.0 | 20.0 | 10.0 | 10.0 |
| Silica | 45.0 | 50.0 | 60.0 | 65.0 | 75.0 | 65.0 | 60.0 | 60.0 | 75.0 | 80.0 |
| Oil | 100 | 10.0 | 30.0 | 30.0 | 30.0 | 30.0 | 30.0 | 20.0 | 15.0 | 10.0 |
| Anti-oxidant | 1.5 | 1.5 | 1.5 | 1.5 | 1.5 | 1.5 | 1.5 | 1.5 | 1.5 | 1.5 |
| Zinc white | 2.5 | 2.5 | 2.5 | 2.5 | 2.5 | 2.5 | 2.5 | 2.5 | 2.5 | 2.5 |
| Vulcanization accelerator | 1.0 | 1.0 | 1.0 | 1.0 | 1.0 | 1.0 | 1.0 | 1.0 | 1.0 | 1.0 |
| Sulfur | 1.5 | 1.5 | 1.5 | 1.5 | 1.5 | 1.5 | 1.5 | 1.5 | 1.5 | 1.5 |

(Dynamic storage elastic modulus E' and Loss tangent "tan $\delta$")

Dynamic storage elastic modulus E' and loss tangent "tan $\delta$" were each measured by exerting the initial load: 160 g on a test piece having thickness: 2 mm, width: 5 mm, and length: 20 mm under the conditions of initial strain: 1% and frequency: 50 Hz by using a spectrometer manufactured by Toyo Seiki Seisaku-sho, Ltd. In this connection, dynamic storage elastic modulus E' was measured at 30 °C and loss tangent "tan $\delta$" was measured at 0 °C and 60 °C, respectively.

(Wet performance)

Wet performance of each test tire was evaluated according to the EU regulation "TEST METHOD FOR TYRE WET GRIP GRADING (C1 TYRES)" and expressed by an index relative to the index value "100" of wet performance of Comparative Example 2 tire. The larger index value represents the better wet performance of the tire.

(Rolling resistance (RR value))

Rolling resistance of each test tire was measured by: assembling the tire with a rim having a width corresponding to the bead width of the tire, to obtain a tire-rim assembly; setting the tire-rim assembly on a drum and exerting thereon the maximum load prescribed for each vehicle on which the tire to be mounted; and running the tire-rim assembly on a drum at drum rotation speed of 100 km/hour. The rolling resistance value thus obtained was converted to an index relative to the index value "100" as the rolling resistance value of Comparative Example 2 tire. The larger index value represents the better rolling resistance performance of the tire.

[Table 2]

| | | Internal pressure of tire (kPa) | Viscoelastic properties of tread rubber | | | Wet performance (Index) | Rolling resistance (Index) |
|---|---|---|---|---|---|---|---|
| | | | E' (30°C MPa) | tan $\delta$ (0°C) | tan $\delta$ (60°C) | | |
| Comp. Ex. 1 | Rubber 1 + Conventional Size | 220 | 5.0 | 0.60 | 0.07 | 102 | 103 |
| Comp. Ex. 2 | Rubber 2 + Conventional Size | 220 | 6.4 | 0.56 | 0.09 | 100 | 100 |
| Comp. Ex. 3 | Rubber 3 + Conventional Size | 220 | 7.6 | 0.85 | 0.11 | 111 | 97 |
| Comp. Ex. 4 | Rubber 4 + Conventional Size | 220 | 7.9 | 0.87 | 0.12 | 112 | 96 |
| Comp. Ex. 5 | Rubber 5 + Conventional Size | 220 | 8.9 | 0.79 | 0.15 | 109 | 91 |
| Comp. Ex. 6 | Rubber 6 + Conventional Size | 220 | 10.0 | 0.78 | 0.17 | 109 | 89 |
| Comp. Ex. 7 | Rubber 7 + Conventional Size | 220 | 11.0 | 0.75 | 0.18 | 108 | 86 |
| Comp. Ex. 8 | Rubber 8 + Conventional Size | 220 | 12.0 | 0.71 | 0.16 | 106 | 90 |
| Comp. Ex. 9 | Rubber 9 + Conventional Size | 220 | 13.0 | 0.71 | 0.18 | 107 | 87 |
| Comp. Ex. 10 | Rubber 1 + Size 1 of our tire | 300 | 5.0 | 0.60 | 0.07 | 90 | 135 |
| Example 1 | Rubber 2 + Size 1 of our tire | 300 | 6.4 | 0.56 | 0.09 | 100 | 130 |

(continued)

| | | Internal pressure of tire (kPa) | Viscoelastic properties of tread rubber | | | Wet performance (Index) | Rolling resistance (Index) |
|---|---|---|---|---|---|---|---|
| | | | E' (30°C MPa) | tan $\delta$ (0°C) | tan $\delta$ (60°C) | | |
| Example 2 | Rubber 3 + Size 1 of our tire | 300 | 7.6 | 0.85 | 0.11 | 110 | 127 |
| Example 3 | Rubber 4 + Size 1 of our tire | 300 | 7.9 | 0.87 | 0.12 | 115 | 126 |
| Example 4 | Rubber 5 + Size 1 of our tire | 300 | 8.9 | 0.79 | 0.15 | 125 | 120 |
| Example 5 | Rubber 6 + Size 1 of our tire | 300 | 10.0 | 0.78 | 0.17 | 120 | 117 |
| Example 6 | Rubber 7 + Size 1 of our tire | 300 | 11.0 | 0.75 | 0.18 | 115 | 113 |
| Example 7 | Rubber 8 + Size 1 of our tire | 300 | 12.0 | 0.70 | 0.16 | 110 | 118 |
| Comp. Ex. 11 | Rubber 9 + Size 1 of our tire | 300 | 13.0 | 0.71 | 0.18 | 98 | 114 |
| Comp. Ex. 12 | Rubber 10 + Size 1 of our tire | 300 | 14.0 | 0.70 | 0.20 | 95 | 106 |
| Example 8 | Rubber 2 + Size 2 of our tire | 300 | 6.4 | 0.56 | 0.09 | 105 | 127 |
| Example 9 | Rubber 2 + Size 1 of our tire | 220 | 6.4 | 0.56 | 0.09 | 93 | 113 |

It is understood from the results of Table 2 that Comparative Example 10-12 tires each having "Size 1 of our tire" but E' beyond the range of 6.0 to 12.0 (30 °C, MPa) unanimously exhibit poorer wet performance than Comparative Example 1-9 tires each having "Conventional Size". In contrast, Example 1-8 tires each having E' within the range of 6.0 to 12.0 (30 °C, MPa) can unanimously exhibit at least equal or better wet performance than Comparative Example 1-9 tires each having "Conventional Size".

In particular, Example 3-7 tires each having E' within the range of 7.9 to 12.0 (30 °C, MPa) can unanimously exhibit significantly better wet performance than the corresponding Comparative Example 4-8 tires each having "Conventional Size". In this connection, Example tires having E' exceeding 7.9 (such as Example 4 tire) can still enhance wet performance, while the corresponding Comparative Examples tires reach the peak of wet performance at E' = 7.9 (Comparative Example 4 tire) and wet performance thereof deteriorates at higher E' values (Comparative Examples 5-8).

REFERENCE SIGNS LIST

1    Tread portion
2    Sidewall portion
3    Bead portion
4    Carcass
5    Bead core
6    Rubber chafer
7    Belt
8    Tread rubber

## Claims

1. A pneumatic radial tire for a passenger vehicle, having a carcass (4) constituted of a carcass ply made of radially-disposed cords provided to extend in a toroidal shape across a pair of bead portions (3) and a tread rubber (8) provided on the outer side in the tire radial direction of the carcass, wherein:

   provided that SW and OD represent cross sectional width and outer diameter of the tire, respectively, and that the tire assembled with a rim is inflated at an internal pressure of at least 250 kPa, SW/OD (a ratio of the cross sectional width SW (mm) with respect to the outer diameter OD (mm) of the tire) is $\leq 0.26$ when SW < 165 (mm); SW and OD satisfy a formula shown below when SW $\geq$ 165 (mm); OD $\geq 2.135 \times$ SW + 282.3; **characterized in that**:

   a rubber composition, forming the tread rubber (8), contains at least a rubber component and filler such that content of the filler is in the range of 55 to 85 parts by mass with respect to 100 parts by mass of the rubber component;
   dynamic storage elastic modulus E' of the tread rubber at 30 °C is in the range of 8.5 MPa to 11.0 MPa;
   loss tangent "tan $\delta$" of the tread rubber at 60 °C is in the range of 0.05 to 0.18; and
   loss tangent "tan $\delta$" of the tread rubber at o °C is in the range of 0.50 to 0.80.

2. The pneumatic radial tire for a passenger vehicle of claim 1, wherein the filler contains silica such that content of silica is in the range of 25 to 100 parts by mass with respect to 100 parts by mass of the rubber component.

## Patentansprüche

1. Radialluftreifen für einen Personenkraftwagen mit einer Karkasse (4), welche aus einer Karkassenlage besteht, welche aus radial angeordneten Korden besteht, die so vorgesehen sind, dass sie sich in einer torusförmigen Form über ein Paar Wulstabschnitte (3) erstrecken, und einen Lauffflächengummi (8), welcher auf der Außenseite der Karkasse in der Radialrichtung des Reifens vorgesehen ist, wobei:

   vorausgesetzt, dass SW und OD die Querschnittsbreite beziehungsweise den Außendurchmesser des Reifens darstellen und dass der mit einer Felge zusammengebaute Reifen bei einem Innendruck von mindestens 250 kPa aufgeblasen wird, SW / OD (ein Verhältnis der Querschnittsbreite SW (mm) in Bezug auf den Außendurchmesser OD (mm) des Reifens) $\leq$ 0,26 bei SW <165 (mm) ist;
   SW und OD erfüllen eine nachstehend gezeigte Formel, wenn SW $\geq$ 165 (mm); OD $\geq 2,135 \times$ SW + 282,3; **dadurch gekennzeichnet, dass**:

   eine Kautschukzusammensetzung, welche den Laufflächenkautschuk bildet, mindestens eine Kautschukkomponente und einen Füllstoff enthält, so dass der Füllstoffgehalt im Bereich von 55 bis 85 Massenteilen liegt in Bezug auf 100 Massenteile der Kautschukkomponente;
   das dynamische Speicher-Elastizitätsmodul E 'des Laufflächenkautschuks bei 30°C im Bereich von 8,5 MPa bis 11,0 MPa liegt;
   die Verlusttangente "tan $\delta$" des Laufflächenkautschuks bei 60°C im Bereich von 0,05 bis 0,18 liegt;
   die Verlusttangente "tan $\delta$" des Laufflächenkautschuks bei o°C im Bereich von 0,5 bis 0,8 liegt.

2. Radialluftreifen für einen Personenkraftwagen nach Anspruch 1, wobei der Füllstoff Siliciumdioxid enthält, so dass der Gehalt an Siliciumdioxid im Bereich von 25 bis 100 Massenteilen in Bezug auf 100 Massenteile der Kautschukkomponente liegt.

## Revendications

1. Pneumatique radial pour un véhicule de tourisme, possédant une carcasse (4) constituée d'une nappe-carcasse fabriquée en câbles en disposition radiale, prévus pour s'étendre selon une forme toroïdale en travers d'une paire de portions de talon (3), et une gomme de bande de roulement (8) prévue sur le côté extérieur dans la direction, radiale par rapport au pneumatique, de la carcasse, dans lequel :

   si SW et OD représentent respectivement la largeur en coupe transversale et le diamètre extérieur du pneumatique, et que le pneu, assemblé à une jante, est gonflé sous une pression interne d'au moins 250 kPa, SW/OD (le rapport entre la largeur en coupe transversale SW (mm) et le diamètre extérieur OD (mm) du pneumatique) est ≤ 0,26 quand SW < 165 (mm) ;

SW et OD satisfont à la formule présentée ci-dessous quand SW ≥ 165 (mm) ; oD ≥ 2,135 x SW + 282,3 ;

**caractérisé en ce que** :

une composition de caoutchouc formant la gomme de bande de roulement (8) contient au moins un composant caoutchouc et une charge, de telle sorte que la teneur en la charge soit comprise dans la plage de 55 à 85 parties en poids pour 100 parties en poids du composant caoutchouc ;

le module d'élasticité de stockage dynamique E' de la gomme de bande de roulement à 30°C est compris dans la plage de 8,5 MPa à 11,0 MPa ;

la tangente de perte "tan □" de la gomme de bande de roulement à 60°C est comprise dans la plage de 0,05 à 0,18 ; et

la tangente de perte "tan □" de la gomme de bande de roulement à o°C est comprise dans la plage de 0,50 à 0,80.

2. Pneumatique radial pour un véhicule de tourisme selon la revendication 1, dans lequel la charge contient de la silice de telle sorte que la teneur en silice soit comprise dans la plage de 25 à 100 parties en poids pour 100 parties en poids du composant caoutchouc.

# FIG. 1

**EP 2 993 062 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7040706 A
- WO 2012176476 A
- US 20110083780 A1
- WO 2008050845 A